# EUROPÄISCHE PATENTSCHRIFT

(11) **EP 1 402 997 B1**
(45) Veröffentlichungstag und Bekanntmachung des Hinweises auf die Patenterteilung: **08.03.2006**
(21) Anmeldenummer: 03020906.8
(22) Anmeldetag: 16.09.2003
(51) Int. Cl.: A61C 1/08, A61C 1/18, B23Q 5/54

(54) **Rotationssperre zur Verhinderung von unerwünschter Rotation einer Welle oder eines Wellenteils, insbesondere für medizinische Hand-und Winkelstücke**
Interlock means for the prevention of unwanted rotation of a shaft or a part thereof, especially for medical handpieces
Moyens de blocage pour la prévention de la rotation non-voulue d'un axe ou d'une partie d'axe, en particulier pour des pièces à main médicales

(30) Priorität: 26.09.2002 AT 14422002
(43) Veröffentlichungstag der Anmeldung: 31.03.2004
(73) Patentinhaber: W & H Dentalwerk Bürmoos GmbH, 5111 Bürmoos (AT)
(72) Erfinder: Schatz, Norbert, 5111 Bürmoos (AT); Jindra, Thomas, 5111 Bürmoos (AT)

(56) Entgegenhaltungen:
- US-A- 6 012 922

## Beschreibung

Die vorliegende Erfindung betrifft eine Rotationssperre im Bereich zweier getrennter, voneinander unabhängigen Wellen oder Wellenteilen zur Verhinderung unerwünschter Rotation einer Welle oder eines Wellenteits. Derartige Rotationssperren können in verschiedenen Geräten, in denen ein Werkzeug über Wellen angetrieben wird, eingesetzt werden. Als ein möglicher Einsatzbereich, der jedoch keinesfalls als Einschränkung der möglichen Anwendungsgebiete zu verstehen ist, wird im folgenden die erfindungsgemäße Rotationssperre in einem Hand- und Winkelstücken für dentale, prophylaktische Anwendungen vorgestellt.

Ziel der präventiven Zahnheilkunde, der sogenannten dentalen Prophylaxe, ist die Verhütung aller Zahn-, Mund- und Kieferkrankheiten. Neben der Individualprophylaxe (u.a. Zähneputzen zuhause) führt auch der Zahnarzt prophylaktische Behandlungen durch, zum Beispiel das Entfernen von Zahnstein, Belägen, Verfärbungen oder das Polieren der Zahnoberfläche. Letzteres wird meist mit speziellen Instrumenten, z.B. Prophylaxe-Winkelstücken, und spezifischen Werkzeugen, z.B. Kappen, so genannte Prophy-Cups, oder Bürsten, durchgeführt. Sie werden über eine Werkzeugkupplung im Kopf des Winkelstücks befestigt und über eine oder mehrere Wellen, die mit einem Motor in Verbindung steht, angetrieben.

Die verwendeten Werkzeuge weisen zur Befestigung an ihrer dem Winkelstückkopf zugewandten Seite einen Stift mit Gewinde auf. Dieser Stift wird in den Obertrieb (die Kupplungswelle) mit einem entsprechenden Gewinde geschraubt. Der Obertrieb steht über mindestens eine weitere Welle mit dem Motor in Verbindung, so daß bei Betrieb des Motors das Prophy-Cup in Rotation versetzt wird.
Um einen sicheren Betrieb zu gewährleisten muß das Prophy-Cup einerseits fest mit dem Winkelstück verbunden sein, andererseits soll es rasch und einfach ausgetauscht werden können. Dies ist aus hygienischen Gründen notwendig, da ein Austausch zumindest zwischen Behandlungen an unterschiedlichen Patienten erfolgen soll, zum Teil aber auch während einer Behandlung am selben Patienten vorkommt.
Das Abnehmen des Werkzeugs erweist sich bei am Markt befindlichen Winkelstücken jedoch als sehr schwierig: Das Einsetzen des Werkzeuges in die Kupplung erfolgt entgegen der Rotationsrichtung der Wellen. Dies ist notwendig um ein Lösen (Herausschrauben) des Werkzeuges aus der Kupplung während des Betriebs zu verhindern, da durch den Druck auf die Behandlungsoberfläche während der Anwendung und die dadurch entstehenden Reibungskräfte das Prophy-Cup gebremst wird und langsamer rotiert als die Kupplungswelle. Das Einsetzen des Werkzeuges in die Kupplung entgegen der Rotationsrichtung der Wellen bedeutet jedoch wiederum, daß das Werkzeug während der Behandlung oftmals noch weiter in die Kupplung geschraubt wird und daß zum Lösen des Werkzeugs dieses in die gleiche Richtung gedreht werden muß wie die Welle während des Betriebs rotiert. Die benötigte Kraft um das am Ende der Behandlung sehr fest sitzende Werkzeug herauszuschrauben ist damit oft größer als die Kraft die notwendig ist, die Antriebswellen zu bewegen. Beim Versuch das Werkzeug mit der Hand aus der Kupplung zu drehen rotiert der Anwender daher sehr oft nur die Wellen ohne das Werkzeug zu lösen.
Behandlungspaste, die nach der Behandlung auf dem Werkzeug klebt und dieses rutschig macht, erschwert dem Anwender noch zusätzlich das Lösen des Werkzeuges.
In der Offenlegungsschrift WO 99/12491 A1 wird eine Vorrichtung beschrieben die verhindert, daß beim Lösen des Werkzeuges die Antriebswelle mitrotiert. In einer um den hinteren Antriebswellenteil angebrachten axialen Verschiebelagerung mit spiralförmiger Bohrung wird ein radial vom vorderen Wellenteil abstehender Stift geführt. Beim Versuch das Werkzeug zu lösen und der damit verursachten Rotation des vorderen Wellenteils wird der Stift gedreht bis er an der höchsten Stelle der spiralförmigen Bohrung ansteht. Dadurch kommt es zu einer axialen Verschiebung der beiden Wellenteile bzw. Verlängerung der Welle, die dadurch gegen die beiden Lager drückt. Der damit entstandene Widerstand reicht aus die Rotation der Welle zu verhindern und das Werkzeug aus der Kupplung lösen zu können.
US 6012922 offenbart ein medizinisches Handstuck gemäß dem Oberbegriff des Anspruchs 1.
Nachteilig bei diesen Vorrichtungen ist die durch die axiale Verschiebung der Wellenteile verursachte starke Belastung der Lager. Bei Kugellagern werden die Rollelemente in die Laufringe gepreßt, wodurch das Laufverhalten verschlechtert wird. Wiederholte Belastung führt schließlich zur Zerstörung der Lager, verbunden mit zeit- und kostenaufwendigem Service und Austausch.

Der vorliegenden Erfindung liegt daher die Aufgabe zugrunde eine verbesserte Vorrichtung zur Unterbindung einer unerwünschten Rotation der Wellen z.B. beim Lösen eines Werkzeuges aus der Kupplung zu schaffen.

Diese Aufgabe wird gemäß der vorliegenden Erfindung durch eine Rotationssperre mit den Merkmalen des Anspruchs 1 gelöst.
Die erfindungsgemäße Rotationssperre nach Anspruch 1 weist einen Sperrstift auf, der beim Lösen des Werkzeuges und durch die damit verursachte unerwünschte Rotation der Wellen radial (bezogen auf die Achse der Wellen) verlagert wird und eine weitere Rotation der Wellen verhindert. In der Ruhestellung (während des Betriebs des Hand- oder Winkelstücks) liegt der Sperrstift auf einem abgeflachten Bereich einer Welle. Beim Lösen des Werkzeuges dreht sich die Welle unter dem Sperrstift bis dieser aus dem abgeflachten Bereich verdrängt, damit radial nach außen verlagert und gegen ein gerätefestes Bauteil (z.B. die Lagerhülse des Getriebes, in dem die Rotationssperre eingebaut ist) gepreßt wird. Über diesen Widerstand wird eine weitere Rotation der Welle verhindert und das Werkzeug kann aus der Kupplung gelöst werden.
Durch diese Rotationssperre kann das Werkzeug aus der Kupplung gelöst werden, ohne daß dazu eine Verlängerung der Antriebswelle nötig ist, die die starke Belastung der Lager verursacht.

Die Erfindung wird nachfolgend anhand eines bevorzugten Ausführungsbeispiels und Bezug nehmend auf die beigefügten Zeichnungen erläutert:
- Figur 1: zeigt als Explosionsdarstellung den Aufbau eines Prophylaxe-Winkelstücks
- Figur 2: zeigt ein Prophylaxe-Winkelstück mit einer axialen Schnittdarstellung des Getriebes und der erfindungsgemäßen Rotationssperre
- Figur 3: zeigt den hinteren Triebwellenteil der erfindungsgemäßen Rotationssperre
- Figur 4: zeigt eine erfindungsgemäße Rotationssperre
- Figur 5A: zeigt im Querschnitt die efindungsgemäße Rotationssperre in Ruhestellung
- Figur 5B: zeigt im Querschnitt die erfindungsgemäße Rotationssperre in Sperrstellung (Blockade der unerwünschten Rotation)
- Figuren 6A - C: zeigen bevorzugte Formen der Verschiebefläche der erfindungsgemäßen Rotationssperre

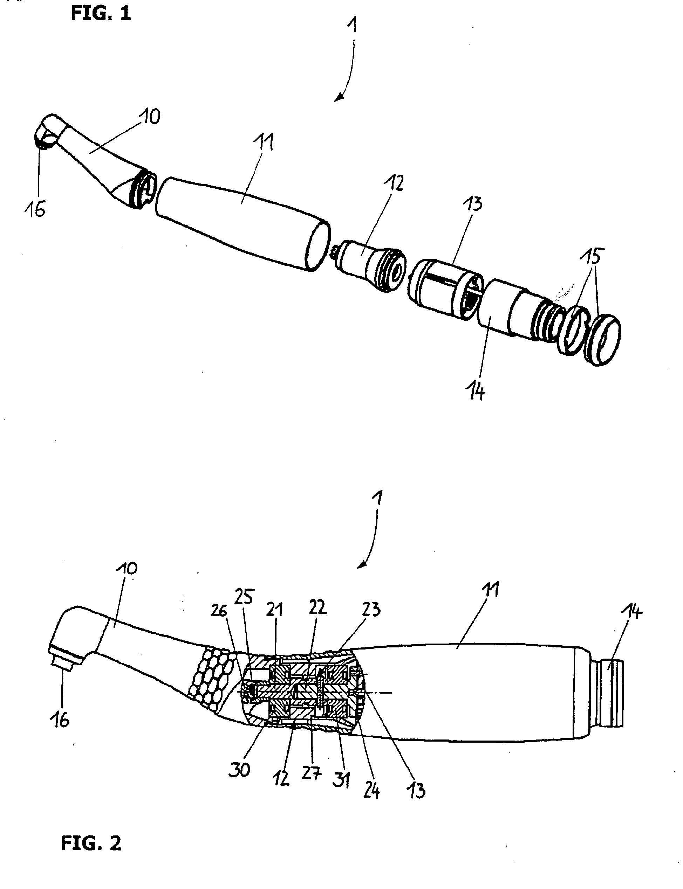

Bei allen Figuren sind gleiche Bauteile mit den gleichen Ziffern beschriftet.
Das in Figur 1 dargestellte Prophylaxe-Winkelstück 1 besteht aus einem Kopfteil 10 mit der im Kopf integrierten Werkzeugkupplung 16, einer Griffhülse 11, dem Getriebe 12, in dem die erfindungsgemäße Rotationssperre enthalten ist und einem Luftmotor 13. Über eine Kupplung 14 mit Verschraubungen 15 zum Anschluß an ein Zwischenstück oder einen Versorgungsschlauch wird der Luftmotor 13 mit Druckluft beaufschlagt. Im Getriebe 12 sowie in der Griffhülse 11 und im Kopfteil 10 sind mehrere Wellen (nicht dargestellt) enthalten, die die Rotationsbewegung des Luftmotors auf das Werkzeug, z.B. ein Prophy-Cup (nicht dargestellt), welches vor Beginn der Anwendung in die Werkzeugkupplung 16 geschraubt wird, übertragen. Anstatt des Luftmotors 13 können auch andere Motortypen zum Antrieb des Werkzeuges eingesetzt werden. Dem gemäß wird über den Versorgungsschlauch entsprechend dem verwendeten Motor die passende Antriebsenergie (z.B. elektrischer Strom, Druckluft, unter Druck gesetzte Gase o.a.) gefördert. Da diese Antriebssysteme als Stand der Technik einem Fachmann für Medizintechnik bekannt sind, wird darauf nicht näher eingegangen.
Figur 2 zeigt das in der Griffhülse 11 des Prophylaxe-Winkelstücks 1 gelagerte Getriebe 12 mit der erfindungsgemäßen Rotationssperre 23 im axialen Schnitt. Der hintere und vordere Triebwellenteil 22 bzw. 21 werden über ein Planetengetriebe 24 durch den Luftmotor 13 angetrieben. Anstelle eines Planetengetriebes kann auch jedes andere geeignete Getriebe verwendet werden. Die beiden Lager 30 und 31, bevorzugt Kugellager, dienen der Lagerung der Triebwellenteile 21 und 22. Über das Zahnrad 25 wird bei Betrieb des Motors die Rotationsbewegung der Triebwellenteile 21 und 22 auf den Mitteltrieb 26 übertragen. Im Kontaktbereich der hinteren und vorderen Triebwellenteile 22 und 21 befindet sich die Rotationssperre 23. Eine Lagerhülse 27 umschließt das Getriebe 12. Die Lagerhülse 27 dient, wie im folgenden noch genau beschrieben wird, der Rotationssperre 23 auch als Widerlager, wenn der Anwender ein Werkzeug aus der Kupplung löst.

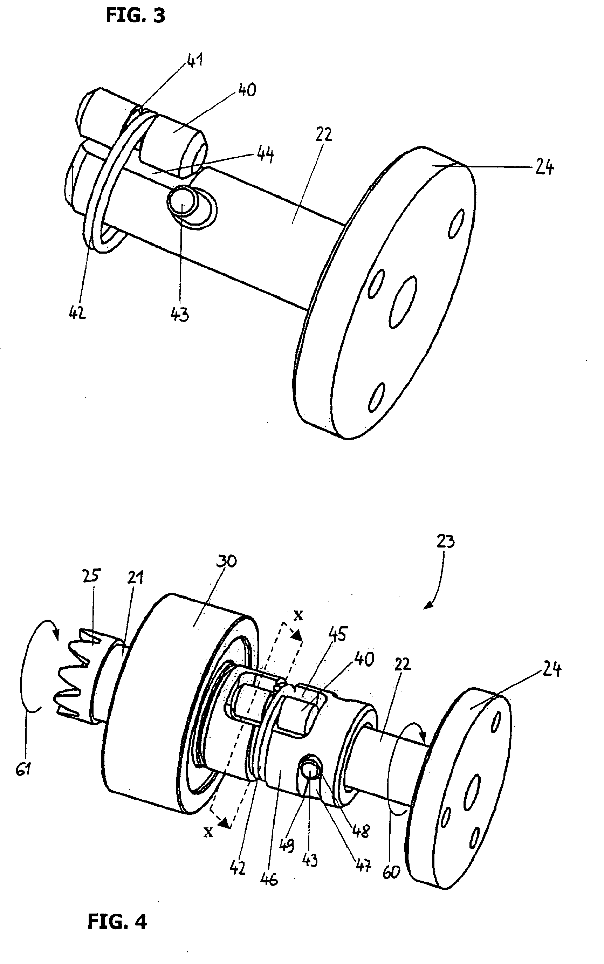

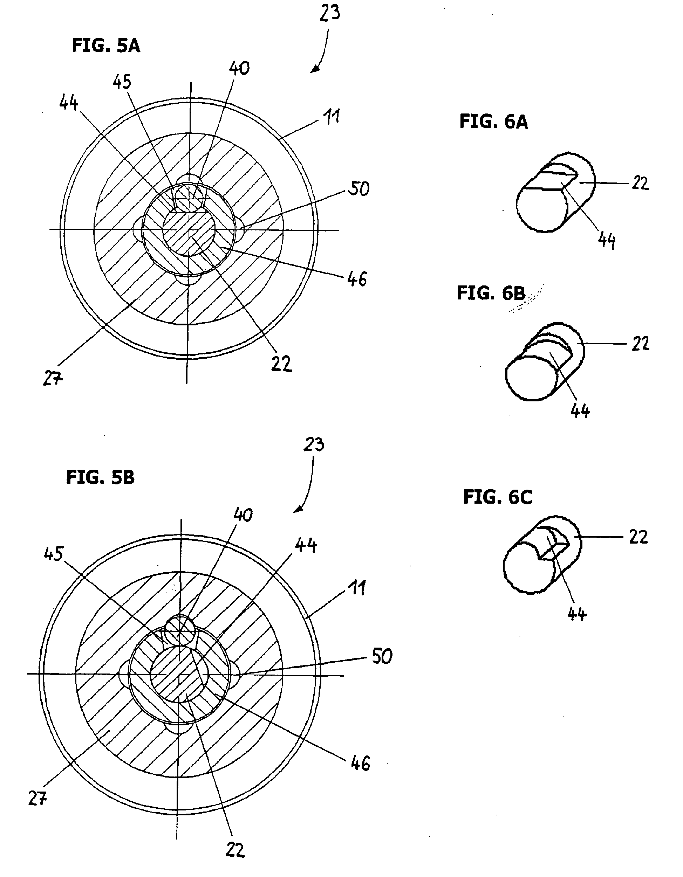

In den Figuren 3 und 4 ist die erfindungsgemäße Rotationssperre detailliert dargestellt. Der Sperrstift 40 lagert auf einer Verschiebefläche 44 des hinteren Triebwellenteils 22. Die Verschiebefläche 44 erstreckt sich in einem bevorzugten Ausführungsbeispiel über zirka ein Viertel des Umfangs des Triebwellenteils 22, sie kann jedoch jede dem sinngemäßen Funktionsprinzip der Erfindung dienende Abmessung betragen. Die Form der Verschiebefläche 44 ist in einem besonders bevorzugten Ausführungsbeispiel eben (siehe Figur 5A und 5B), kann jedoch auch andere z.B. gebogene oder dem sinngemäßen Funktionsprinzip der Erfindung dienende Formen aufweisen. Bevorzugte Formen sind in den Figuren 6A - C abgebildet: Figur 6A zeigt die ebene Ausführung, die produktionstechnisch sehr einfach herzustellen ist, Figur 6B eine konvexe Ausführung und Figur 6C eine Stufenform, bei denen aufgrund des fließenden Übergangs von der Verschiebefläche 44 auf den nicht vertieften oder abgeflachten Teil des hinteren Triebwellenteils 22 die Bedienung leichtgängiger wird. Über einen Einstich 41 und einer darin eingreifende Feder 42 wird der Sperrstift 40 auf der Verschiebefläche 44 positioniert. Ein weiterer Stift 43 steht radial vom hinteren Triebwellenteil 22 weg. Über das nur teilweise dargestellte Planetengetriebe 24 steht der hintere Triebwellenteil 22 mit dem Luftmotor 13 in Verbindung. Verriegelungsbuchse 46 verbindet den hinteren Triebwellenteil 22 mit dem vorderen Triebwellenteil 21. Stift 43 ragt dabei in eine Führungsnut 47 der Verriegelungsbuchse 46, Sperrstift 40 ist in einer Ausnehmung 45 positioniert. Die Verriegelungsbuchse 46 kann als eigener Bauteil hergestellt werden und anschließend mit dem vorderen Triebwellenteil 21 verbunden werden, z.B. durch Verpressen oder jede andere geeignete Methode. In einem bevorzugten Ausführungsbeispiel wird die Verriegelungsbuchse 46 gemeinsam mit dem vorderen Triebwellenteil 21 als ein Bauteil hergestellt. Über das Zahnrad 25 wird während des Betriebs die Rotationsbewegung des Motors 13 auf den Mitteltrieb 26 übertragen.
Die Funktionsweise der Rotationssperre 23 ist in den Figuren 5A und 5B dargestellt und wird im folgenden beschrieben. Die beiden Querschnitte stellen die Rotationssperre 23 im Bereich der Schnittebene X in Figur 4 dar. Bei Betrieb des Prophylaxe-Winkelstücks 1 rotiert der hintere Triebwellenteil 22 in die durch den Pfeil 60 in Figur 4 dargestellte Richtung (wobei die gewählte Richtung willkürlich ist und das Funktionsprinzip der Rotationssperre 23 unabhängig von der Antriebsrichtung ist). Durch die Rotation wird der Stift 43 in der Führungsnut 47 bewegt bis er an das obere Ende 48 anschlägt und im weiteren Über die Verriegelungsbuchse 46 den vorderen Triebwellenteil 21 in Richtung des Pfeiles 61 rotiert. Der Sperrstift 40 nimmt währenddessen seine Ruhestellung ein, das heißt er liegt auf der Verschiebefläche 44 (siehe Figur 3) und ist damit in der Ausnehmung 45 der Verriegelungsbuchse 46 versenkt. Diese Position ist in Figur 5A dargestellt.
Findet ein Werkzeugwechsel statt, so muß der Anwender das Werkzeug in die selbe Richtung drehen, wie die Antriebswellen rotieren. Dies bedeutet der vordere Triebwellenteil 21 und die Verriegelungsbuchse 46 rotieren in die durch den Pfeil 61 dargestellte Richtung, bis das untere Ende 49 der Führungsnut 47 gegen den Stift 43 gedrückt wird. Mit der Verriegelungsbuchse 46 rotiert auch der Sperrstift 40, der dadurch von der Verschiebefläche 44 weg auf einen nicht abgeflachten oder vertieften Teil des hinteren Triebwellenteils 22 verschoben und gleichzeitig radial (bezogen auf die Achse des Triebwellenteils) aus der Ausnehmung 45 gedrängt und gegen ein handstückfestes Bauteil, in einem bevorzugten Ausführungsbeispiel die Lagerhülse 27 des Getriebes 12, gepreßt wird. Diese Situation ist in Figur 5B dargestellt. In einem bevorzugten Ausführungsbeispiel ist in dem Bereich, in dem der Sperrstift 40 gegen die Lagerhülse 27 des Getriebes 12 drückt eine Vertiefung 50 zum Einrasten des Stiftes angebracht. In der in Figur 5B dargestellten Position verhindert der Sperrstift 40 nun das Weiterdrehen des vorderen Triebwellenteils 21 und der Anwender kann das Werkzeug problemlos aus der Werkzeugkupplung lösen (herausschrauben). Hat der Anwender das Werkzeug gelöst und übt somit keine Kraft mehr auf den vorderen Triebwellenteil 21 aus, so wird der Sperrstift 40 durch die Kraft der Feder 42 wieder auf die Verschiebefläche 44 gedreht.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäßen Funktionsprinzip der Erfindung nicht verändern. Insbesondere kann die Rotationssperre zwischen allen Wellen oder Wellenteilen, die sich zwischen dem Motor und dem Werkzeug befinden, implementiert werden. Auch Ausformung und Anzahl der Verschiebefläche 44 sowie die Anzahl der Stifte 43 und Führungsnuten 47 ist nicht auf die in der Beschreibung angeführten Beispiele beschränkt. Die geometrische Ausbildung des Sperrstiftes 40 kann jede Form, bevorzugt zylindrische, ovale oder kugelförmige umfassen, die eine radiale Verlagerung des Sperrstiftes 40 unterstützt. Als Widerlager für den Sperrstift 40 kann jedes gerätefeste Bauteil des Winkeistückes 1 dienen, der Bereich in dem der Sperrstift 40 gegen den gerätefesten Bauteil gepreßt wird, kann entsprechende Vertiefungen oder Oberflächenstrukturen aufweisen.

## Patentansprüche

1. Rotationssperre (23) im Bereich zweier getrennter, voneinander unabhängigen Wellen oder Wellenteilen (21, 22) zur Verhinderung von unerwünschter Rotation einer Welle oder eines Wellenteils (21, 22),
**dadurch gekennzeichnet, daß**
mindestens ein Sperrstift (40), auf einer jedem Sperrstift (40) zugeordneten, vertieften Verschiebefläche (44) einer Welle oder eines Wellenteils (21, 22) lagert und durch die unerwünschte Rotation einer Welle oder eines Wellenteils (21, 22) radial bezogen auf die Achse der Welle oder eines Wellenteils verschoben und gegen ein oder mehrere gerätefeste Bauteile (27) gepreßt wird.

2. Rotationssperre (23) nach Anspruch 1,
**dadurch gekennzeichnet, daß**
mindestens ein Sperrstift (40) in einer Ausnehmung (45) einer Verriegelungsbuchse (46) lagert.

3. Rotationssperre (23) nach Anspruch 2,
**dadurch gekennzeichnet, daß**
die Verriegelungsbuchse (46) als Teil jener Welle oder jenes Wellenteils (21, 22) ausgeführt oder damit fest verbunden ist, der nicht die Verschiebefläche(n) (44) aufweist.

4. Rotationssperre (23) nach Anspruch 3,
**dadurch gekennzeichnet, daß**
jene Welle oder jener Wellenteil (21, 22) der die Verschiebefläche(n) (44) aufweist, zusätzlich einen Stift (43) trägt, der innerhalb einer Führungsnut (47) der Verriegelungsbuchse (46) geführt wird.

5. Rotationssperre (23) nach einem der vorhergehenden Ansprüche, **dadurch**
**gekennzeichnet, daß**
der Bereich des oder der gerätefesten Bauteile (27), gegen den der mindestens eine Sperrstift (40) gepreßt wird eine Vertiefung (50) und / oder eine Oberflächenstruktur aufweist.

6. Rotationssperre (23) nach einem der vorhergehenden Ansprüche, **dadurch**
**gekennzeichnet, daß**
die Rotationssperre (23) als Teil eines medizinischen oder medizintechnischen Handstückes oder Winkelstückes (1) ausgeführt ist.

7. Rotationssperre (23) nach Anspruch 6,
**dadurch gekennzeichnet, daß**
die Rotationssperre (23) als Teil eines medizinischen Hand- oder Winkeistückes (1) für die dentale Prophylaxe ausgeführt ist.

8. Rotationssperre (23) nach Anspruch 6 oder 7, **dadurch gekennzeichnet, daß**
die Rotationssperre (23) Teil des Getriebes (12) ist.

## Claims

1. A rotation locking device (23) located in the area of two separate, independent shafts or shaft sections (21, 22) for preventing any undesired rotation of a shaft or shaft section (21, 22),
**characterised in that**
at least one locking pin (40) rests on an indented displacement surface (44) located on a shaft or shaft section (21, 22) and assigned to each locking pin (40), and is displaced radially in relation to the axis of the shaft or shaft section by the undesired rotation of a shaft or shaft section (21, 22), and is pressed against one or more components (27) which are fixed to the body of the appliance.

2. A rotation locking device (23) according to claim 1, **characterised in that**
at least one locking pin (40) is located in a cut-out (45) of a locking bush (46).

3. A rotation locking device (23) according to claim 2, **characterised in that**
the locking bush (46) is designed to form part of each shaft or shaft section (21, 22) or is permanently connected to a shaft or shaft section (21, 22) which does not have displacement surface(s) (44).

4. A rotation locking device (23) according to claim 3, **characterised in that**
those shafts or shaft sections (21, 22) which have displacement surface(s) (44) are also additionally fitted with a pin (43), which is fed along the guide groove (47) of the locking bush (46).

5. A rotation locking device (23) according to one of the above claims, **characterised in that**
the area of the component(s) (27) fixed to the body of the appliance against which the at least one locking pin (40) is pressed, is indented and / or has a surface structure of some kind.

6. A rotation locking device (23) according to one of the above claims, **characterised in that**
the rotation locking device (23) is designed to form part of a handpiece or contra-angle handpiece (1) used in the medical profession.

7. A rotation locking device (23) according to claim 6, **characterised in that**
the rotation locking device (23) is designed to form part of handpiece or contra-angle handpiece (1) used in the medical profession for prophylactic dental treatment.

8. A rotation locking device (23) according to claim 6 or 7, **characterised in that**
the rotation locking device (23) forms part of the gearbox (12).

## Revendications

1. Blocage de rotation (23) au niveau de deux arbres ou parties d'arbre séparés (21, 22), indépendants l'un de l'autre afin d'empêcher une rotation non désirée d'un arbre ou d'une partie d'un arbre (21, 22), **caractérisé par le fait que**
au moins un pignon de blocage (40) est logé sur une surface de déplacement creusée (44) d'un arbre ou d'une partie d'arbre (21, 22) attribuée à chaque pignon de blocage (40) et déplacé radialement par rapport à l'axe de l'arbre ou d'une partie d'arbre par la rotation non désirée d'un arbre ou d'une partie d'arbre (21, 22) et pressé contre un ou plusieurs éléments de construction fixes par rapport à l'appareil (27).

2. Blocage de rotation (23) selon la revendication 1, **caractérisé par le fait que**
au moins un pignon de blocage (40) est logé dans un creux (45) d'une douille de verrouillage (46).

3. Blocage de rotation (23) selon la revendication 2, **caractérisé par le fait que**
la douille de verrouillage (46) est exécutée ou reliée fixement en tant qu'arbre ou partie d'arbre (21, 22) qui ne présente pas la (les) surface(s) de déplacement (44).

4. Blocage de rotation (23) selon la revendication 3, **caractérisé par le fait que**
chaque arbre ou partie d'arbre (21, 22) qui présente la (les) surface(s) de déplacement (44) dispose en plus d'un pignon (43) qui est introduit à l'intérieur de la rainure de guidage (47) de la douille de verrouillage (46).

5. Blocage de rotation (23) selon une des revendications précédentes, **caractérisé par le fait que**
la zone de l'élément ou des éléments fraisés (27), contre laquelle au moins un pignon de blocage (40) est pressé, ait un creux (50) et / ou une structure de surface.

6. Blocage de rotation (23) selon une des revendications précédentes, **caractérisé par le fait que** le blocage de rotation (23) est exécuté en tant que partie d'une pièce à main ou d'un contre-angle (1) médical ou médico-technique.

7. Blocage de rotation (23) selon la revendication 6, **caractérisé par le fait que**
le blocage de rotation (23) est exécuté en tant que partie d'une pièce à main ou d'un contre-angle (1) médical pour la prophylaxie dentaire.

8. Blocage de rotation (23) selon la revendication 6 ou 7, **caractérisé par le fait que**
le blocage de rotation (23) est une partie de l'engrenage (12).
